# EUROPÄISCHE PATENTANMELDUNG

(11) **EP 4 620 648 A1**
(43) Veröffentlichungstag der Anmeldung: **24.09.2025**
(21) Anmeldenummer: 24201530.3
(22) Anmeldetag: 20.09.2024
(51) Int. Cl.: B29C 33/30, B29C 43/02, B29C 43/36, B29C 43/42, B29C 33/48, B29L 23/20, B29L 31/56, B65D 35/08, B65D 35/44, B65D 47/14

(54) **VERPACKUNGSTUBENVERSCHLUSS**

(30) Priorität: 19.03.2024 DE 102024000895
(71) Anmelder: PackSys Global AG, 8630 Rüti (CH)
(72) Erfinder: ALMER, Philippe, 8155 Niederhasli (CH); LÄUBLI, Julius, 8645 Jona (CH)
(74) Vertreter: Patent- und Rechtsanwälte Behrmann Wagner PartG mbB

(57) **Zusammenfassung**

Die vorliegende Erfindung betrifft ein Verfahren zur Herstellung eines Verpackungstubenverschlusses bestehend aus einem Kappenelement (2) mit Schulterbereich (3) und einem dazu über ein Scharnier (5) bewegliches Deckelelement (4), welche einstückig ausgebildet sind, aufweisend die Schritte:
- Bereitstellen eines Formgebungswerkzeugs für ein Formpressverfahren, vorzugsweise umfassend ein erstes und ein zweites Formteil (A,B),
- Auf- und/oder Einbringen einer Materialdosis in ein erstes Formteil des Formgebungswerkzeugs,
- Formen des Verpackungstubenverschlusses (1) durch Heranführen eines zweiten Formteils (A) des Formgebungswerkzeugs an das erste Formteil (B), derart, dass sich die Materialdosis in einer sich zwischen den Formteilen bildenden Kavität insbesondere zur einstückigen Ausbildung von Kappenelement (2), Scharnier (5) und Deckelelement (4) verteilt, und
- Verfestigen und bevorzugt anschliessende Entnahme des geformten Verpackungstubenverschlusses (1).

## Beschreibung

Die vorliegende Erfindung betrifft ein Verfahren zur Herstellung eines Verpackungstubenverschlusses, den mit dem Verfahren herstellbaren Verpackungstubenverschluss, und eine Verpackungsstube aufweisend einen erfindungsgemäßen Verpackungstubenverschluss.

Verpackungsverschlüsse für Tuben bzw. Verpackungstubenverschlüsse sind aus dem Stand der Technik hinreichend bekannt. Diese werden üblicherweise mittels Spritzgussverfahren hergestellt, wodurch unterschiedliche Formgebungen und insbesondere auch komplexere Geometrien verwirklicht werden können. Ein derartiger Verpackungsverschluss umfasst ein Kappenelement mit einer darin angeordneten Auslassöffnung und einem Schulterbereich, der zur späteren Befestigung an einen Tubenkörper ausgebildet ist. Das Kappenelement kann zusätzlich ein damit integral ausgebildetes Deckelelement umfassen, welches am Kappenelement mittels eines Scharniers beweglich angeordnet ist.

Ausgehend von dem vorbekannten Stand der Technik stellt sich die vorliegende Erfindung die Aufgabe ein verbessertes Herstellungsverfahren für einen Verpackungstubenverschluss bereitzustellen, welches insbesondere eine hinsichtlich der Verfahrensführung optimierte Fertigung eines Verpackungsverschlusses und weiter vorteilhaft einer diesen umfassenden Verpackungstube ermöglicht.

Diese Aufgabe wird durch die Gegenstände der unabhängigen Ansprüche gelöst. Die abhängigen Ansprüche stellen weiter vorteilhafte Ausgestaltungen der Erfindung dar. Vorteilhafte Ausführungsformen sind Gegenstand der nachfolgenden Beschreibung, der Figurenbeschreibung, der Figuren sowie der Unteransprüche. Auch um unnötige Wiederholungen zu vermeiden oder zu minimieren sollen nachfolgend alle bezüglich des Verfahrens offenbarten Merkmale auch als entsprechend bezüglich des Produkts und der Vorrichtung offenbart und beanspruchbar gelten, sowie umgekehrt.

In einem ersten Aspekt betrifft die Erfindung ein Verfahren zur Herstellung eines Verpackungstubenverschlusses, umfassend und vorzugsweise bestehend aus einem Kappenelement mit Schulterbereich und einem dazu über ein Scharnier bewegliches Deckelelement, welche einstückig ausgebildet sind, aufweisend die Schritte:
- Bereitstellen eines Formgebungswerkzeugs für ein Formpressverfahren, vorzugsweise umfassend ein erstes und ein zweites Formteil,
- Auf- und/oder Einbringen einer Materialdosis in ein erstes Formteil des Formgebungswerkzeugs,
- Formen des Verpackungstubenverschlusses durch Heranführen eines zweiten Formteils des Formgebungswerkzeugs an das erste Formteil, derart, dass sich die Materialdosis in einer sich zwischen den Formteilen bildenden Kavität insbesondere zur einstückigen Ausbildung von Kappenelement, Scharnier und Deckelelement verteilt, und
- Verfestigen des ausgeformten bzw. geformten Verpackungstubenverschlusses, sowie vorzugsweise eine anschließende Entnahme des Verpackungstubenverschlusses aus dem Formgebungswerkzeug.

Entgegen dem bekannten Stand der Technik wird der Verpackungstubenverschluss, aufweisend ein Kappenelement mit einem Schulterbereich, einem beweglichen Scharnier und einem Deckelelement zum teilweisen Verschließen des Kappenelements bzw. einer Auslassöffnung im Kappenelement nun nicht mittels Spritzgussverfahren hergestellt, sondern mittels Formpressverfahrens (Compression Moulding). Dieses Verfahren hat gegenüber der bekannten Herstellung mittels Spritzgussverfahren den Vorteil, dass mit dem gleichen Werkzeug unterschiedliche Materialdicken und somit eine Variation des resultierenden Produkts insbesondere im Kappenelement und in dessen Schulterbereich zur Adaption einer gewünschten Barriere im Material herstellbar sind. Weiterhin wird während der Fertigung deutlich weniger Energie benötigt, insbesondere da für das Verpressen geringere Drücke und damit weniger grosse Schliesskräfte benötigt werden. Zudem ist das Verfahren deutlich vielseitiger einsetzbar und kann insbesondere auch dazu dienen, neben der Herstellung des Verpackungstubenverschluss, gleichzeitig einen Tub*enkörper an den Verschluss mitanzubringen bzw. damit - insbesondere in einem Verfahrensschritt - zu verbinden. Hierdurch werden zusätzlich weitere Vorteile erzielt, wie weiter untenstehend ausgeführt. Weiterhin erlaubt es das Verfahren, sichtbare Anspritzpunkte, die das äußere Erscheinungsbild des Verpackungstubenverschlusses beeinträchtigen und nachteilig für die Haptik und/oder spätere Aufbringung von Labels sein können, zu vermeiden.

In einer bevorzugten Ausführungsform wird beim Verfahren durch Variation eines Volumens der auf- und/oder eingebrachten Materialdosis eine Dicke des resultierenden Verpackungstubenverschlusses, insbesondere des Kappenelements, in einer Axialrichtung des Tubenverschlusses variiert. Hierdurch ist insbesondere eine Dicke der zur Axialrichtung im Wesentlichen orthogonal ersteckenden Bereich des Tubenverschlusses adaptiv an eine gewünschte Ausbildungsform einstellbar. Hierdurch kann insbesondere eine Barrierefunktion des Kappenelements entsprechend vordefinierte Anforderungen adaptiv ausgebildet werden. In einer bevorzugten Ausführungsform ist wenigstens eines der Formteile des Formgebungswerkzeugs in Kompressionsrichtung mittels zugeordneter Federmittel federnd gelagert und weiter vorteilhaft hierbei vorgespannt angeordnet. Ein Einfedern erfolgt beim Erreichen der Verpresskraft. Eine anliegende Vorspannkraft der Federmittel kann je nach Anforderungen und einer zu erzielenden Materialdicke eingestellt werden. Die absolute (End-)Position des Einfederns hängt dabei vorzugsweise vom Volumen der auf- und/oder eingebrachten Materialdosis ab.

In einer bevorzugten Ausführungsform kann das Verfahren einen Einstellungsschritt zur Erzielung einer gewünschten Dicke mittels Adaption einer Vorspannungskraft eines Formteils und/oder mittels Adaption der auf- und/oder eingebrachten Materialdosis umfassen.

In einer bevorzugten Ausführungsform werden das Kappenelement, das Scharnier und das relativ zum Kappenelement bewegliche Deckelelement gleichzeitig in einem einzigen Verfahrensschritt, und weiter vorteilhaft einstückig bzw. integral aus der auf- und/oder eingebrachten Materialdosis, während der Formgebung , d.h. beim Formen ausgebildet.

In einer bevorzugten Ausführungsform ist das Formgebungswerkzeug derart ausgebildet, dass sich ein zur Formung des Scharniers ausgebildeter Innenkonturabschnitt des Formgebungswerkzeugs, insbesondere bereitstellend eine Verjüngung in der Kavität, im Wesentlichen in einer Ebene und/oder in einer Erstreckungsrichtung erstreckt, welche in Axialrichtung des Verpackungstubenverschlusses verläuft und/oder angeordnet ist. Unter Axialrichtung wird dabei eine Längsrichtung und/oder Rotationsachse des Tubenverschlusses verstanden.

Durch die Ausbildung bzw. Ausrichtung des Scharniers in einer Ebene und/oder Erstreckungsrichtung, welche im Wesentlichen in Axialrichtung bzw. parallel zur Axialrichtung liegt, wird das erfindungsgemäße Formpressverfahren hinsichtlich der Verfahrensführung und insbesondre auch hinsichtlich der Ausbildung des Formgebungswerkzeugs deutlich vereinfacht. Auf diese Weise kann insbesondere eine das Scharnier ausbildende Verjüngung im Formgebungswerkzeug vorgesehen werden bei gleichzeitiger Reduktion der Komplexität des Formgebungswerkzeugs, sodass insbesondere auch eine kosteneffiziente Fertigung des Verpackungstubenverschlusses in Serienfertigung ermöglicht wird.

Weiter vorteilhaft ist das Formgebungswerkzeug derart ausgebildet, dass sich eine zur Formung des Scharniers und des daran anschließenden Deckels ausgebildete Innenkontur des Formgebungswerkzeugs im Wesentlichen in einer Ebene und/oder in einer Erstreckungsrichtung erstreckt, welche in Axialrichtung des Verpackungstubenverschlusses verläuft und/oder angeordnet ist. Weiter vorteilhaft umfasst die Innenkontur dabei vorzugsweise zwei sich gegenüberliegende Konturabschnitte zur Formung des Scharniers und des daran anschließenden Deckels zwischenliegend zu diesen Abschnitten, wobei sich die Konturabschnitte im Wesentlichen in Axialrichtung des Verpackungstubenverschlusses erstrecken bzw. verlaufen.

Weiter vorteilhaft ist das Scharnier ausschließlich mittels eines zweiten, insbesondere oberen bzw. äußeren (bezogen auf eine Außenseite des Deckelements), Formteils des Formgebungswerkzeugs ausgebildet. Hierdurch wird eine weitere Vereinfachung der Verfahrensführung und eine Reduktion der Komplexität des notwendigen Formgebungswerkzeugs erzielt.

Vorzugsweise ist ein Formteil, insbesondere das zuvor genannte, zweite Formteil, mehrteilig, weiter bevorzugt umfassend bewegliche Elemente, insbesondere Schiebeelemente zur Bereitstellung von Hinterschnitten und/oder Öffnungen während des Formpressverfahrens, ausgeführt. Ein weiteres Formteil, insbesondere das zuvor genannte, erste Formteil, ist vorzugsweises als einstückiges Formteil ausgebildet, welches weiter vorzugsweise frei von beweglichen Teilen ist.

Die ein- und/oder aufgebrachte Materialdosis wird vorzugsweise als im Wesentlichen ringförmige Materialportion bereitgestellt. Die Materialdosis umschließt dabei vorzugsweise einen freien Raum und/oder kann in ihrer Dicke entlang des Umfangs variabel ausgebildet sein. Der freie Raum kann dabei auch nicht-zentrisch (bezogen auf das ihn umgebende Material) lokalisiert sein. Dies bedeutet, dass die Materialdosis kein Ring sein muss, sondern auch eine andere und/oder über den Umfang variierende Form ausbilden kann, vorzugsweise aufweisend ein darin ausgebildetes Durchgangsloch.

Vorteilhaft kann die ein- und/oder aufgebrachte Materialdosis einen plastifizierten Kunststoff, eine Pulp-Masse, ein reaktives Gemisch, ein selbstpolymerisierendes und/oder selbstvernetzendes System umfassen.

Vorteilhaft kann das Verfestigen des Verpackungstubenverschlusses ein Abkühlen des erhitzten Materials, ein Trocknen einer Pulp-Materialportion, und/oder ein Vernetzen und/oder Polymerisieren einer reaktiven Masse umfassen.

In einem weiteren Aspekt betrifft die Erfindung einen Verpackungstubenverschluss herstellbar oder hergestellt mit dem Verfahren wie vorgehend beschrieben.

In einem weiteren Aspekt betrifft die Erfindung einen Verpackungstubenverschluss für eine Verpackungstube umfassend ein Kappenelement mit einem Schulterbereich und einem dazu über ein Scharnier bewegliches und einstückig mit diesen ausgebildetes Deckelelement, vorzugsweise herstellbar oder hergestellt mit einem Verfahren wie vorgehend beschrieben, wobei sich ein das Scharnier ausbildender Materialsteg im Wesentlichen in einer Ebene und/oder in einer Erstreckungsrichtung erstreckt, welche in einer Axialrichtung des Verpackungstubenverschlusses verläuft und/oder angeordnet ist.

Vorteilhaft ist das Deckelelement zum selektiven Verschließen einer Auslassöffnung des Kappenelements, d.h. zum gewünschten Schließen oder Wiederverschließen der Auslassöffnung durch manuelle Bewegung durch einen Benutzer, ausgebildet. Weiter vorteilhaft erstreckt sich das Deckelelement in einer Offenstellung, in welcher das Deckelelement vorzugsweise auch geformt wird, im Wesentlichen in einer Ebene und/oder in einer Erstreckungsrichtung, welche in einer Axialrichtung des Verpackungstubenverschlusses verläuft und/oder angeordnet ist.

Weiter vorteilhaft umfasst das Deckelement ein sich davon vorzugsweise senkrecht erstreckendes Verschlusselement, insbesondere in Form eines Stopfens mit Dichtfunktion, zum selektiven Verschließen einer Auslassöffnung des Kappenelements.

In einer bevorzugten Ausführungsform weist der das Scharnier ausbildende Materialsteg eine Dicke bzw. Materialstärke auf, welche 10 bis 50%, mehr bevorzugt 10 bis 40%, weiter bevorzugt 10 bis 30% der Dicke bzw. Materialstärke der daran anschließenden Bauteile des Deckelements und/oder Kappenelements beträgt.

Weiter vorteilhaft ist der Verpackungstubenverschluss frei von einem insbesondere sichtbaren Anspritzpunkt. Dies ist ein entscheidender Vorteil gegenüber der üblichen Herstellung des Tubenverschlusses mittels Spritzgussverfahren, das verfahrensbedingt einen sichtbaren Anspritzpunkt bzw. Materialflussansatzpunkt in der Oberfläche des resultierenden Produkts erzeugt, was jedoch nachteilig nicht nur für Optik und Haptik, sondern auch für eine weitere Oberflächenbehandlung und/oder für das Aufbringen eines Labels sein kann.

In einem weiteren Aspekt betrifft die Erfindung ein Verfahren zur Herstellung einer Verpackungstube mit einem Tubenverschluss bestehend aus einem Schulterelement und einem dazu über ein Scharnier bewegliches Deckelelement, aufweisend vorzugsweise die Verfahrensschritte wie vorgehend bezüglich der Herstellung des Tubenverschlusses mittels Formpressen beschrieben, und umfassend den weiteren Schritt der Bereitstellung eines Tubenkörpers zur Verbindung mit dem Verpackungstubenverschluss, vorzugsweise derart dass wenigstens ein Abschnitt des Tubenkörpers in die Kavität des Formgebungswerkzeugs hineinragt, wobei der Tubenkörper beim Formen des Verpackungstubenverschlusses mit diesem, vorzugsweise in einem Verfahrensschritt, verbunden wird.

Die Fertigung einer Verpackungstube aufweisend einen daran angeordneten und integral damit ausgebildeten Verpackungstubenverschluss mittels des erfindungsgemäßen Formpressverfahrens ermöglicht eine Vielzahl von Vorteilen gegenüber dem bekannten Spritzgussverfahren zur Fertigung einer Verpackungstube.

Zunächst müssen bei der Herstellung keine externen Komponenten zugeführt werden, was nicht nur zu Störungen führen kann, z.B. durch Klemmen in den Zuführschienen, sondern auch den Lagerplatz und die Verfahrensplanung vereinfacht. Des Weiteren wird beim Formpressen der Tubenverschluss bzw. Tubenkopf aus dem auf- bzw. eingebrachten Material, insbesondere aus Granulat/Rohstoff urgeformt, wobei die Zuführung von Granulat viel einfacher und betriebssicherer ist. Hierbei können aus demselben Granulat beliebig viele Geometrien und/oder auch unterschiedliche Farben geformt werden. Die Bereitstellung von unterschiedlichen Farben kann hierbei mittels Zumischens von entsprechenden Masterbatches erreicht werden, wofür lediglich ein geringer Anteil von ca. 2% vom Granulat benötigt wird und wodurch wiederum der Lagerplatz und die Kosten für die Bevorratung minimiert werden. Weiterhin wird beim erfindungsgemäßen Verfahren signifikant weniger Energie gegenüber der bekannten Herstellung mittels Spritzgussverfahren mit anschließendem Verschweißen des Tubenkörpers benötigt, da kein separater Arbeitsgang zum Verschweißen bzw. zur Verbindung mit dem Tubenkörper nach der Herstellung des Tubenverschlusses notwendig ist, sondern dies in einem Verfahrensschritt erfolgen kann. Auch wird beim erfindungsgemäßen Verfahren für den Tubenverschluss kein separater Flansch zum späteren Verbinden mit dem Tubenkörper benötigt, was zu einem geringeren Materialeinsatz und damit einer zusätzlichen Kostenersparnis beim Herstellungsverfahren führt.

Weiterhin vorteilhaft kann beim erfindungsgemäßen Verfahren die Verpackungstube derart gefertigt werden, dass der Tubenkörper formschlüssig an den (aussen liegenden) Formteilen des Tubenverschlusses bzw. Tubenkopfs anliegt, so dass ein praktisch nahtloser Übergang vom Rohrkörper zum Kopf entsteht. Dies ist haptisch und/oder optisch bzw. ästhetisch ein deutlicher Vorteil gegenüber der bekannten Fertigung mittels Spritzgussverfahren und anschließendem Verschweißen von Rohrkörper und Tubenkopf, bei welchem der Rohrkörper üblicherweise an eine Innenseite eines vorgesehenen Flansches angepresst wird, was zwangsläufig zu kleinen Absätzen und zudem einer minderen Ästhetik führt. Dies wird verschärft wenn Tubenkörper verschiedener Dicken mit dem Tubenkopf verschweisst werden.

Weiterhin vorteilhaft wird durch die gleichzeitige Fertigung von Tubenkopf und dessen Anbindung mit dem Tubenkörper eine gewünschte Dichtigkeit und Festigkeit des Verbunds von Rohrkörper und Tubenkopf sichergestellt, insbesondere da der flüssige Kunststoff im Formenteil automatisch seinen Weg findet und Lücken ausfüllt. Bei der bekannten Fertigung mittels Spritzgussverfahren und anschließendem Verschweißen von Rohrkörper und Tubenkopf treten hingegen öfter Mängel beim Verbindungsschritt der zwei Komponenten auf, so dass spezielle Leaktest-Vorrichtungen zur Qualitätssicherung nachgeschaltet werden, was die Verfahrensführung verkompliziert. Ein weiterer Vorteil ist das Fehlen eines Anspritzpunktes, wie bereits zuvor hinsichtlich des Verpackungstubenverschlusses ausgeführt.

Zusammenfassend ermöglicht das erfindungsgemäße Verfahren eine deutlich einfachere Verfahrensführung, da der Tubenkopf und die Verbindung von Tubenkopf und Tubenkörper nicht mehr separat, sondern gleichzeitig in einem Verfahrensschritt herstellbar sind. Die hierfür geeigneten Herstellungsanlagen brauchen daher keine sogenannten Capper mehr, d.h. Vorrichtungen zur Anbindung des Tubenkopfs auf den Tubenkörper, so dass diese deutlich kleiner und kostengünstiger ausführbar sind, deutlich weniger Energie benötigen, eine effizientere Verfahrensführung aufgrund reduzierter Prozessschritte ermöglichen. Die Integration der Elemente Deckel, Scharnier und Schulter führt darüberhinaus zu weiteren Materialeinsparungen im Vergleich zu konventionellen Tubenverschlüssen.

In einer bevorzugten Ausführungsform wird auf einem inneren Teil bzw. Abschnitt des Formgebungswerkzeuges die Materialdosis in Form eines Vorformlings aufgetragen bzw. aufgebracht, beispielsweise aus erhitztem bzw. erwärmtem Kunststoff, wie vorgehend beschrieben, bevorzugt in einer Ringgeometrie oder einer Donutgeometrie, bevor das bevorzugt mehrteilige Formgebungswerkzeug verschlossen wird oder in einen geschlossenen Zustand überführt wird. Hierbei sind auch Formgebungswerkzeuge bekannt, die im Vergleich zur vorstehenden Ausführung "auf dem Kopf stehen". In diesem Fall wird der Vorformling in den äußeren Teil des Formgebungswerkzeugs eingebracht und der innere Teil wird von oben eingeführt. Für die Wirkung der vorliegenden Erfindung ist es unbedeutend, wie das Formgebungswerkzeug ausgerichtet ist. Durch eine entsprechend ausgebildete Kavität im Inneren des Formgebungswerkzeugs (im geschlossenen Zustand), in den auch ein axialer Endabschnitt des Tubenkörpers im geschlossenen Zustand des Formgebungswerkzeugs hineinragt, wird beim Schließen und während des geschlossenen Zustands des Formgebungswerkzeugs der Vorformling in den Tubenkopf umgeformt oder ausgeformt, insbesondere verpresst und gleichzeitig mit dem axialen Endabschnitt des Tubenkörpers verbunden.

Der mit dem Tubenverschluss zu verbindende Tubenkörper kann dabei aus jeglichen, insbesondere flexiblen Material bzw. Materialien sein. Die Verbindung zwischen diesem und dem Tubenverschluss wird dabei vorteilhaft durch geeignete Materialwahl der Materialdosis und/oder die Geometrie der Formteile im Verbindungsbereich vorgegeben. Die Kombinationsvielfalt ist hierbei sehr weitreichend. Insbesondere kann der mittels des erfindungsgemäßen Verfahrens mit dem Tubenverschluss verbindbare Tubenkörper jegliche Ausbildung aufweisen, welche elastisch oder nicht-elastisch zusammendrückbar ist und dem Verpackungsinhalt angemessene Barriere-Eigenschaften besitzt.

In einer bevorzugten Ausführungsform umfasst das bereitgestellte Formgebungswerkzeug ein zusätzliches Formteil, welches als ein- oder mehrteiliger Dorn ausgebildet ist, wobei vorzugsweise die weiteren Formteile des Formgebungswerkzeugs als eine dazu bewegliche, vorzugsweise mehrteilige Matrize ausgebildet sind. Vorzugsweise wird dabei vor dem Zusammenführen der jeweiligen Formteile zum Formen des Verpackungstubenverschlusses und des damit verbundenen Tubenkörpers, ein Tubenrohr oder dieses ausbildender Materialabschnitt über den Dorn geführt, vorzugsweise derart, dass ein Abschnitt, insbesondere ein Randabschnitt des Tubenkörpers während des Formens beim Verpressen der Formteile in die Kavität zur Verbindung mit dem Verpackungstubenverschluss hineinragt.

Die Verbindung zwischen Verpackungstubenverschluss und Tubenkörper kann vorzugsweise eine Verbindung mittels Schweißens, Klebens, oder Prägens eines Formschlusses umfassen. Beispielsweise kann die auf- und/oder eingebrachte Materialdosis eine Wärme bzw. Hitze aufweisen, welche bei Kontakt mit einem Abschnitt des Tubenkörpers diesen wenigstens teilweise derart erhitzt, dass dieser eine Schweißverbindung bzw. Stoffschlussverbindung mit dem Tubenverschluss eingeht. Alternativ oder zusätzlich kann eine Formschlussverbindung zwischen Tubenverschluss und dem damit zu verbindenden Tubenkörper, insbesondere durch entsprechende Oberflächengestaltung des Tubenkörpers, beim Verfahren hergestellt werden.

In einem weiteren Aspekt betrifft die Erfindung eine Verpackungstube herstellbar oder hergestellt mit dem Verfahren wie vorgehend beschrieben.

In einem weiteren Aspekt betrifft die Erfindung eine Vorrichtung zur Durchführung des Verfahrens zur Herstellung eines Tubenverschlusses und/oder einer Verpackungstube mit Tubenverschluss wie vorgehend beschrieben, aufweisend ein Formgebungswerkzeug für ein Formpressverfahren, umfassend wenigstens ein erstes und ein dazu relativ bewegliches zweites Formteil, wobei sich ein zur Formung des Scharniers eines Verpackungstubenverschlusses ausgebildeter Innenkonturabschnitt des Formgebungswerkzeugs, insbesondere bereitstellend eine Verjüngung in der Kavität des Formgebungswerkzeugs, im Wesentlichen in einer Ebene und/oder in einer Erstreckungsrichtung erstreckt, welche in einer Axialrichtung des resultierenden Verpackungstubenverschlusses verläuft und/oder angeordnet ist.

Weitere Vorteile, Merkmale und Einzelheiten der Erfindung werden nachfolgend beispielhaft anhand der schematischen Zeichnungen beschrieben. Diese zeigen in:
- Fig. 1:: eine perspektivische Seitenansicht eines erfindungsgemäßen Verpackungsstubenverschlusses, hergestellt mit dem erfindungsgemäßen Verfahren
- Fig. 2a,b:: schematische Schnittansichten des Verpackungstubenverschlusses gemäß Fig. 1;
- Fig. 2c: eine Teilansicht des Verpackungstubenverschlusses gemäß Fig. 2b (Ausschnitt A);

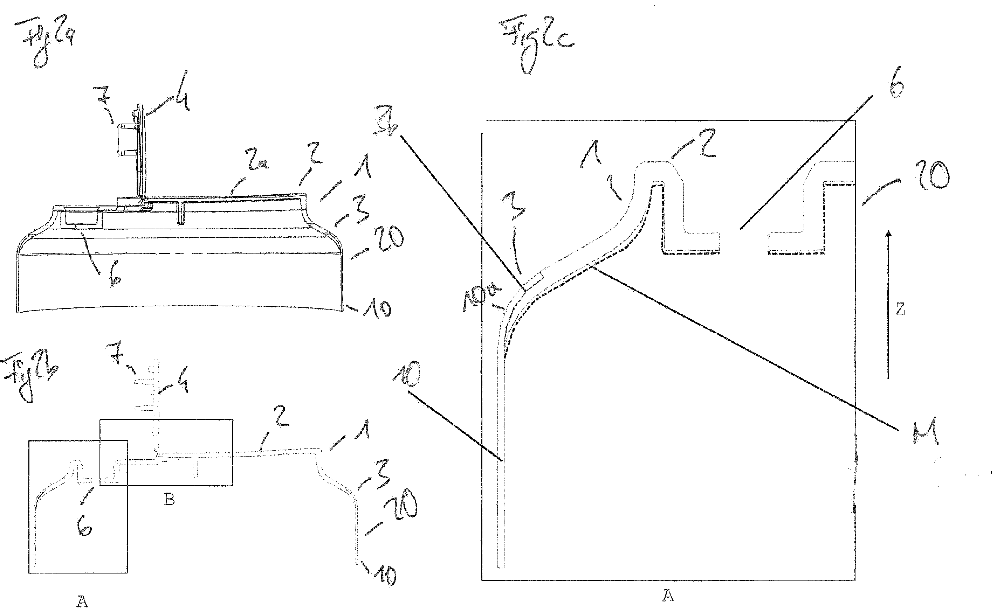

- Fig. 2c: eine Teilansicht des Verpackungstubenverschlusses gemäß Fig. 2b (Ausschnitt B); und

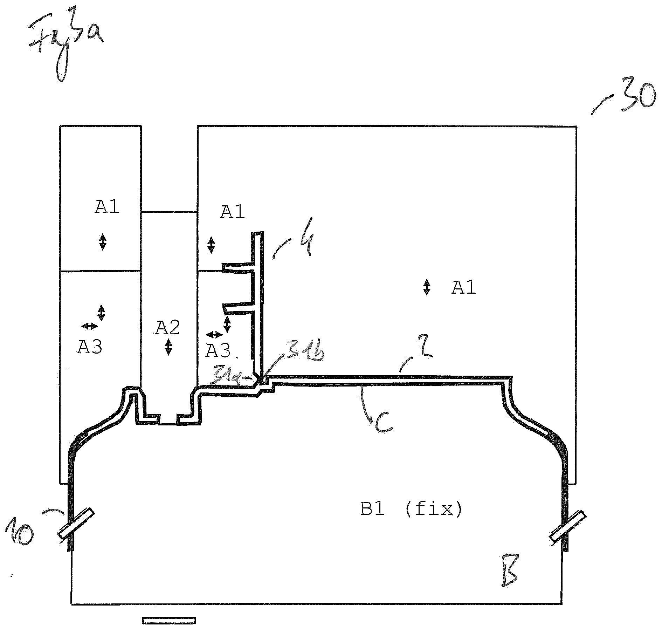

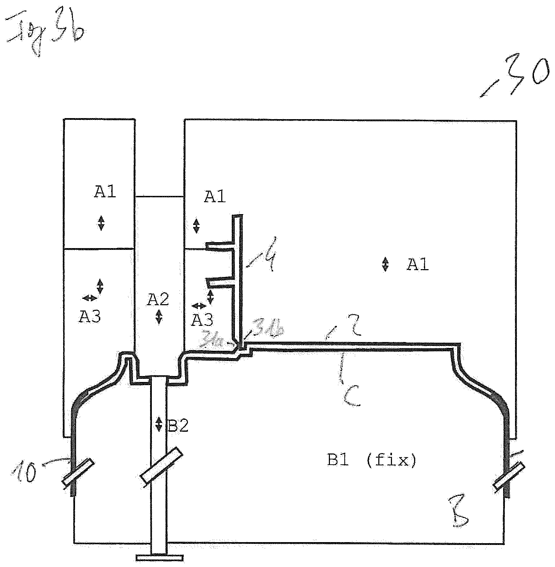

- Fig. 3a,b: eine schematische Schnittansicht eines Formgebungswerkzeugs zur Durchführung des erfindungsgemäßen Verfahrens.

Die Darstellungen sind schematisch und vereinfacht dargestellt. Gleiche Elemente oder Merkmale sind mit gleichen Bezugszeichen versehen

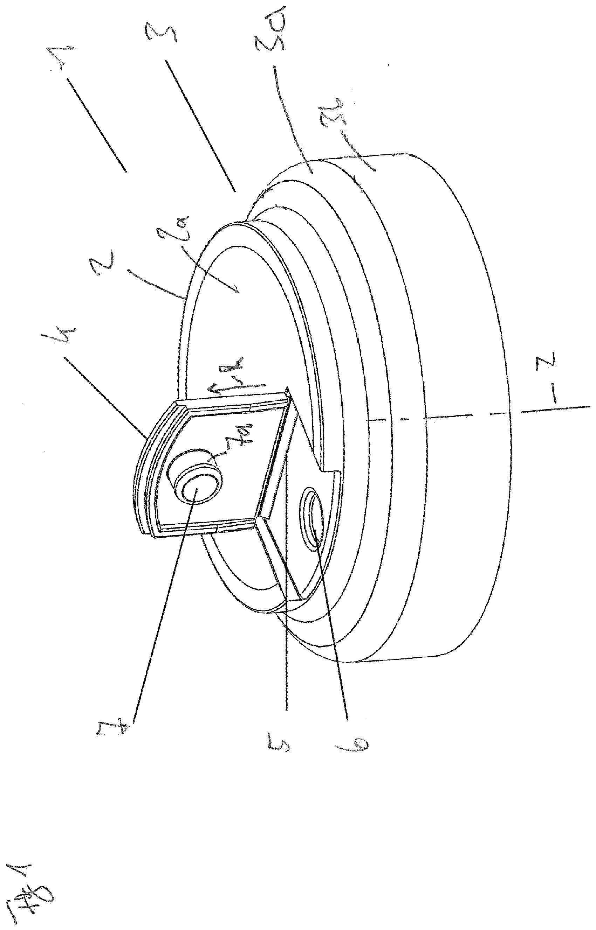

Ein bevorzugtes Ausführungsbeispiel eines erfindungsgemäßen Verpackungsstubenverschlusses 1 und der erfindungsgemäßen Verpackungstube 20, vorzugsweise hergestellt mit den erfindungsgemäßen Verfahren werden im Folgenenden mit Bezug auf die Fig. 1 bis 2c beschrieben. Die darin gezeigte geometrische bzw. strukturelle Ausbildung des Tubenverschlusses 1 und der Verpackungstube 20 sind dabei lediglich schematisch und beispielhaft.

Der Tubenverschluss 1 umfasst ein Kappenelement 2 mit Schulterbereich 3 und einem dazu über ein Scharnier 5 bewegliches Deckelelement 4. Der Tubenverschluss 1 umfassend oder bestehend aus den vorgenannten Komponenten ist dabei vorzugsweise einstückig ausgebildet.

Das Kappenelement 2 ist als vorzugsweise rundes oder ovales Element ausgebildet und umfasst einen vorzugsweise flachen endseitigen Abschluss- bzw. Kopfbereich 2a und eine darin ausgebildete Auslassöffnung 6. Der Kopfbereich 2a dient dabei als endseitiger Tubenabschluss, wenn der Tubenverschluss 1 mit einem Tubenkörper 10 verbunden ist.

Der Schulterbereich 3 ist integral bzw. einstückig mit dem Kappenelement 3 ausgebildet und erstreckt sich zu einer vom Kopfbereich 2a abgewandten Seite des Tubenverschlusses 1. Der Schulterbereich 3 bildet dabei vorzugsweise einen Bereich mit sich in dessen Erstreckungsrichtung vergrößerndem Durchmesser zur Bereitstellung einer Tubenschulter 3a in an sich bekannter Weise aus. Der Schulterbereich 3 umfasst weiter vorzugsweise endseitig einen vorzugsweise wenigstens teilweise zylinderabschnittsförmigen Schulterbundabschnitt 3b, welcher sich vorzugsweise wenigstens teilweise in bzw. parallel zur Axialrichtung Z des Tubenverschlusses 1 erstreckt und zur Anordnung bzw. zur Verbindung mit einem Tubenkörper 10 ausgebildet ist.

Das Deckelement 4 umfasst ein sich vorzugsweise senkrecht zu einer Erstreckungsrichtung des Deckelements 4 erstreckendes Verschlusselement 7, vorzugsweise in Form eines vorstehenden Stopfens, weiter vorzugsweise in Form eines vorstehenden Zylinder- oder Rohrabschnitts. Eine Mantelfläche 7a des Verschlusselements 7 ist hierbei vorzugsweise derart ausgebildet, dass diese eine abdichtende Funktion beim Verschließen der Auslassöffnung 6 aufweist.

In Offenstellung des Deckelelements 4, in welcher der Tubenverschluss 1 vorzugsweise auch gefertigt wird, erstreckt sich das Deckelelement 4 in Erstreckungsrichtung R, welche in Axialrichtung Z des Tubenverschlusses 1 bzw. parallel dazu verläuft.

Fig. 2a bis 2d zeigen verschiedene Schnittansichten des Verpackungsstubenverschlusses 1 und der erfindungsgemäßen Verpackungstube 20 aufweisend den Tubenverschluss 1. Insbesondere wird letztere durch eine Verbindung eines Tubenkörpers 10 mit dem Tubenverschluss 1 gebildet. Sowohl der Verpackungstubenverschluss 1, als auch die Verpackungstube 20 aufweisend den Tubenverschluss 1 können mit dem erfindungsgemäßen Verfahren hergestellt werden, wie später mit Verweis auf die Fig. 3a,b beschrieben wird.

Wie in Fig. 2c gezeigt umfasst die Verpackungstube 20 einen Tubenkörper 10. Dieser kann in an sich bekannter Weise aus einem einzelnen Material, beispielsweise geformt aus einem extrudierten Kunststoffrohr oder einem Materialverbund, insbesondere einem Laminat aufweisend mehrere Materialschichten gebildet sein. Der Tubenkörper 10 umfasst dabei eine auf den Schulterbundabschnitt 3b angepassten Durchmesser zur Befestigung am Tubenversschluss 1.

Der Tubenkörper 10 umfasst weiter vorteilhaft einen endseitigen Verbindungsabschnitt 10a, welcher zur Anlage an und Verbindung mit dem Tubenverschluss 1, insbesondere an/mit dem Schulterbundabschnitt 3b, ausgebildet ist und vorzugsweise während des erfindungsgemäßen Verfahrens, weiter vorteilhaft in einem einzigen Verfahrensschritt zusammen mit der Herstellung des Tubenverschlusses 1 mit diesem verbunden wird.

In Fig. 2c ist mittels einer gestrichelten Linie M eine Dickenvariation in Z-Richtung des Tubenverschlusses 1 dargestellt. Hierbei wird, wie später noch beschrieben wird, je nach der ein- und/oder aufgebrachten Materialmenge zum Formen des Bauteils, eine Dicke bzw. Materialstärke der Tubenverschlusskomponenten in Z-Richtung eingestellt bzw. variiert.

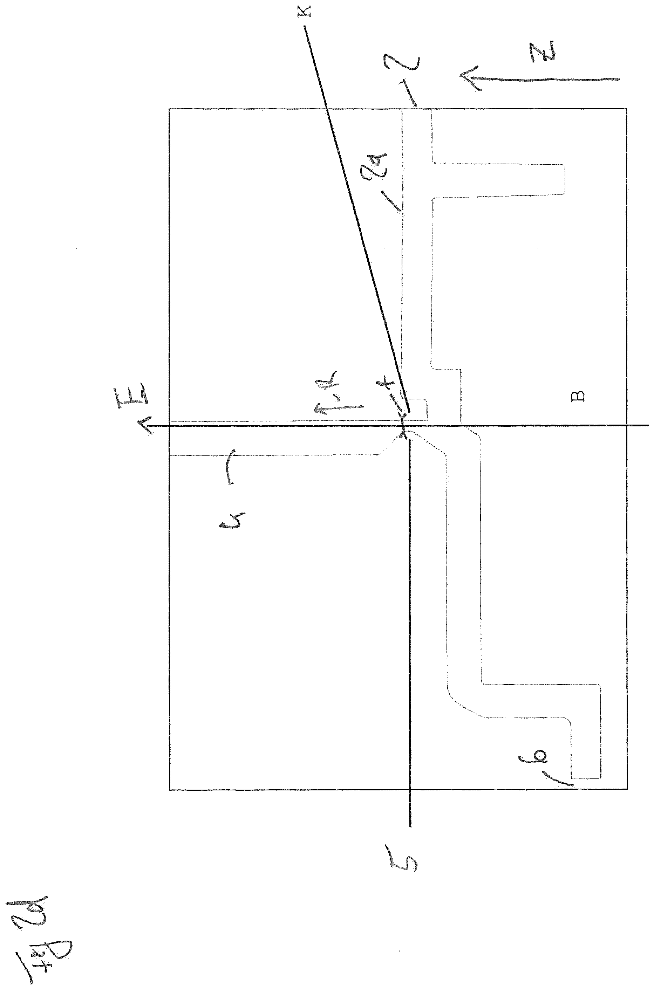

Fig. 2d zeigt eine Detailschnittansicht des Scharniers 5 und des daran anschließenden Deckelelements 4. Das Scharnier 5 wird erfindungsgemäß durch einen geformten Materialsteg des gefertigten Tubenverschlusses 1 gebildet, welcher sich, insbesondere ausgehend vom Kappenelement 2, in einer Erstreckungsrichtung R erstreckt, die in Axialrichtung Z des Verpackungstubenverschlusses 1 verläuft oder angeordnet ist. Das Scharnier 5 ist hierbei wenigstens teilweise als sich im Wesentlichen linear erstreckender Materialsteg ausgebildet. Weiter vorteilhaft liegt das Scharnier 5 in einer in Richtung der Axialrichtung Z verlaufenden bzw. parallel dazu angeordneten Scharnierebene E.

Der Verpackungstubenverschluss 1 umfasst weiter vorteilhaft eine sich in Axialrichtung Z erstreckende Aussparung K, welche zwischen Deckelelement 4 und Kappenelement 2 angeordnet ist und direkt an eine das Scharnier 5 ausbildende Materialverjüngung angrenzt. Die Aussparung K ist hierbei vorzugsweise in Axialrichtung Z bzw. vertikal angeordnet und frei von Hinterschnitten.

Der das Scharnier ausbildende Materialsteg 5 weist vorzugsweise eine Dicke bzw. Materialstärke t auf, welche 10 bis 50%, mehr bevorzugt 10 bis 40%, weiter bevorzugt 10 bis 30% der Dicke bzw. Materialstärke der daran anschließenden Bauteile des Deckelements 4 und/oder Kappenelements 2 beträgt.

Ein bevorzugtes Ausführungsbeispiel des erfindungsgemäßen Verfahrens wird im Folgenden mit Bezug auf die Fig. 3a,3b beschrieben, welche lediglich schematisch zwei mögliche Ausführungsformen eine Formgebungswerkzeugs zur Durchführung des Verfahrens zeigen. Herbei wird insbesondere das Fertigungsverfahren zur Tubenherstellung beschrieben. Dieses eignet sich auch zur Herstellung des Tubenverschlusses (alleine), wobei im Gegensatz zur Tubenherstellung kein Tubenkörper 10 zur auszubildenden Materialmasse zugeführt wird.

Eine zur Durchführung des Verfahrens geeignete Vorrichtung 30 umfasst ein Formgebungswerkzeug, geeignet zur Ausführung eines Formpressverfahrens. Dies umfasst wenigstens ein erstes und ein dazu relativ bewegliches zweites Formteil A,B, welche zwischenliegend eine Kavität C ausbilden. Die Formteile A,B sind relativ zueinander beweglich angeordnet und lassen sich wenigstens in eine Offenstellung und eine Schließstellung bringen. Die Formteile A,B können hierbei wenigstens teilweise mehrteilig ausgebildet sein. So besteht das Formteil A vorteilhaft aus den Teilelementen A1, A2, A3 bestehen, welche beweglich zueinander angeordnet sind. Die Teile A2,A3 können Schieberelemente sein, insbesondere zur Bereitstellung bzw. zum Formen von einzelnen Konturbereichen des Tubenverschlusses 1. Das Formteil B kann einteilig ausgebildet sein. Alternativ kann das Formteil B wenigstens einen ersten, vorzugsweise zusammenhängenden Formenblock B1 aufweisen, mit einem darin beweglich gelagerten Schieberelement B2. Das Formteil A bildet hierbei vorzugsweise eine mehrteilige Matrize aus. Das Formteil B bildet vorzugsweise einen Dorn bzw. eine Patrize aus, um welche ein Tubenkörper 10 angeordnet ist und welcher beim Verfahren derart positioniert ist, dass wenigstens ein Verbindungsabschnitt 10a in die Kavität C ragt, zur Verbindung des Tubenkörpers 10 mit dem zu formenden Tubenverschluss 1.

Zum Formen eines Bauteils wird eine Materialdosis in die Kavität C auf- und/oder eingebracht und die Formteile A,B aufeinander zubewegt, wobei die zwischen den Formteilen ausgebildete Kavität derart ausgeformt ist, dass die auf- und/oder eingebrachte Materialdosis die gewünschte Form des resultierenden Bauteils, insbesondere des erfindungsgemäßen Tubenverschlusses 1 annimmt. In der geschlossenen Endposition erfolgt ein Verfestigen gefolgt von einer anschließenden Entnahme des gefertigten Bauteils. Durch Einstellung der Menge der auf- und/oder eingebrachten Materialdosis kann eine Dickenvariation des resultierenden Bauteils erzielt werden, wie auch in Verbindung mit Fig. 2c gezeigt. Die Materialdosis wird dabei in Form eines Vorformlings aufgetragen bzw. aufgebracht, beispielsweise aus erhitztem bzw. erwärmtem Kunststoff, wie vorgehend beschrieben, bevorzugt in einer Ringgeometrie oder einer Donutgeometrie.

Wie in Fig. 3a,3b gezeigt (vgl. auch Fig. 2d) umfasst das Formgebungswerkzeug vorzugsweise einen zur Formung des Scharniers 5 ausgebildeten Innenkonturabschnitt 31a,31b, insbesondere bereitstellend eine Verjüngung in der Kavität C des Formgebungswerkzeugs. Der Innenkonturabschnitt 31a,31c ist dabei vorzugsweise in einer Ebene angeordnet und/oder erstreckt sich in einer Erstreckungsrichtung R, welche in Axialrichtung Z des resultierenden Verpackungstubenverschlusses verläuft und/oder angeordnet ist.

Ein möglicher Bewegungsablauf der in Fig. 3a,b dargestellten Formwerkzeugvorrichtung kann bei der Herstellung der erfindungsgemäßen Verpackungstube 20 wie folgt erfolgen:
Die Formteile A1-A3 befinden sich zunächst in Verpressposition (wie dargestellt). Anschließend werden die Formteile A,B in Vertikalrichtung aufeinander zu bewegt, so dass eine zwischenliegende Kavität C verschlossen und vorzugsweise gleichzeitig mit einer Materialdosis gefüllt wird. Das Formteil B2 (Fig. 3b) kann hjerbei zur Ausformung der Dicke im Bereich der Auslassöffnung 6 einfedern. Anschließend erfolgt ein Kühlen des geformten Bauteils.

Das Formteil A2 kann anschließend zurückgezogen, werden, derart, dass das Formteil A3 bewegt werden kann. Anschließend kann das Formteil A3 in Zeichenrichtung nach links geschoben werden. Anschließend kann das Formteil A3 mit dem Formteil A1 gemeinsam vertikal verschoben werden. Die Formteilblöcke A,B können anschließend in die Offenstellung gebracht werden. Das Formteil B kann weiter bevorzugt insbesondere horizontal relativ zum Formteil A verschoben werden. Die fertige geformte Verpackugnsstube 20 kann anschliessend nach oben abgezogen werden.

Anschließend oder gleichzeitig kann eine weitere Patrize B, die mit einem Tubenrohr 10 bestückt ist unter dem Formteil bzw. Formteilblock A positioniert werden. Anschließend oder gleichzeitig können die Formteile A2,A3 in die dargestellte Position zurück überführt werden.

Das Formteil A3 kann optional federnd ausgebildet werden. Hierdurch kann auf das bewegliche Formteil bzw. Schieberelement B2 (vgl. Fig. 3b) verzichtet werden.

Die gezeigte Darstellung des Formgebungswerkzeugs ist lediglich beispielhaft und kann auch anders orientiert sein. Insbesondere sind auch Formgebungswerkzeuge bekannt, welche im Vergleich zur vorstehenden Ausführung "auf dem Kopf stehen".

### Bezugszeichenliste

- **1**: Tubenverschluss
- 2: Kappenelement
- 2a: Kopfbereich
- 3: Schulterbereich
- 3a: Tubenschulter
- 3b: Schulterbundabschnitt
- 4: Deckelelement
- 5: Scharnier
- 6: Auslassöffnung
- 7: Verschlusselement
- 7a: Mantelfläche Verschluss
- 10: Tubenkörper
- 10a: Verbindungsabschnitt

- 20: Verpackungstube
- 30: Formgebungsvorrichtung
- 31a,b: Innenkonturabschnitt

- Z: Axialrichtung
- R: Erstreckungsrichtung Deckeln, Scharnier
- E: Scharnierebene
- K: Aussparung
- t: Materialstärke
- A,B: Formteile
- C: Kavität

## Patentansprüche

1. Verfahren zur Herstellung eines Verpackungstubenverschlusses bestehend aus einem Kappenelement (2) mit Schulterbereich (3) und einem dazu über ein Scharnier (5) bewegliches Deckelelement (4), welche einstückig ausgebildet sind, aufweisend die Schritte:
- Bereitstellen eines Formgebungswerkzeugs für ein Formpressverfahren, vorzugsweise umfassend ein erstes und ein zweites Formteil (A,B),
- Auf- und/oder Einbringen einer Materialdosis in ein erstes Formteil des Formgebungswerkzeugs,
- Formen des Verpackungstubenverschlusses (1) durch Heranführen eines zweiten Formteils (A) des Formgebungswerkzeugs an das erste Formteil (B), derart, dass sich die Materialdosis in einer sich zwischen den Formteilen bildenden Kavität insbesondere zur einstückigen Ausbildung von Kappenelement (2), Scharnier (5) und Deckelelement (4) verteilt, und
- Verfestigen und bevorzugt anschliessende Entnahme des geformten Verpackungstubenverschlusses (1).

2. Verfahren nach Anspruch 1, wobei durch Variation eines Volumens der auf- und/oder eingebrachten Materialdosis eine Dicke des resultierenden Verpackungstubenverschlusses (1), insbesondere des Kappenelements (2), in einer Axialrichtung (Z) des Tubenverschlusses (1) variierbar ist.

3. Verfahren nach Anspruch 1 oder 2, wobei das Kappenelement (2), das Scharnier (5) und das relativ zum Kappenelement bewegliche Deckelelement (4) gleichzeitig in einem einzigen Verfahrensschritt beim Formen einstückig ausgebildet werden.

4. Verfahren nach einem der vorhergehenden Ansprüche, wobei das Formgebungswerkzeug derart ausgebildet ist, dass sich ein zur Formung des Scharniers (5) ausgebildeter Innenkonturabschnitt (31a,31b) des Formgebungswerkzeugs, insbesondere bereitstellend eine Verjüngung in der Kavität (C), im Wesentlichen in einer Ebene und/oder in einer Erstreckungsrichtung (R) erstreckt, welche in Axialrichtung (Z) des Verpackungstubenverschlusses (1) verläuft und/oder angeordnet ist.

5. Verfahren nach einem der vorhergehenden Ansprüche, wobei das Scharnier (5) ausschließlich mittels eines zweiten, insbesondere oberen, Formteils (A) des Formgebungswerkzeugs ausgebildet wird.

6. Verfahren nach einem der vorhergehenden Ansprüche, wobei der Verpackungstubenverschluss eine sich in Axialrichtung (Z) erstreckende Aussparung (K) aufweist, welche zwischen Deckelelement (4) und Kappenelement (2) angeordnet ist und direkt an eine das Scharnier (5) ausbildende Materialverjüngung angrenzt.

7. Verfahren nach einem der vorhergehenden Ansprüche, wobei ein Formteil (A), insbesondere das zweite Formteil, mehrteilig, bevorzugt umfassend bewegliche Elemente (A1 ,A2,A3), insbesondere mit Schiebeelementen zur Bereitstellung von Hinterschnitten und/oder Öffnungen während des Formpressverfahrens, ausgeführt ist, und/oder wobei ein weiteres Formteil (B), insbesondere das erste Formteil, als einstückiges Formteil ausgebildet ist, welches vorzugsweise frei von beweglichen Teilen ist.

8. Verpackungstubenverschluss für eine Verpackungstube (20) umfassend ein Kappenelement (2) mit einem Schulterbereich (3) und einem dazu über ein Scharnier (5) bewegliches und einstückig mit diesen ausgebildetes Deckelelement (4), vorzugsweise herstellbar oder hergestellt mit einem Verfahren nach einem der Ansprüche 1 bis 7, wobei sich ein das Scharnier (5) ausbildender Materialsteg im Wesentlichen in einer Ebene (E) und/oder in einer Erstreckungsrichtung (R) erstreckt, welche in einer Axialrichtung (Z) des Verpackungstubenverschlusses (1) verläuft und/oder angeordnet ist.

9. Verpackungstubenverschluss nach Anspruch 8, wobei das Deckelelement (4) zum selektiven Verschließen einer Auslassöffnung (6) des Kappenelements (2) ausgebildet ist, und/oder wobei sich das Deckelelement (4) in einer Offenstellung im Wesentlichen in einer Ebene (E) und/oder in einer Erstreckungsrichtung (R) erstreckt, welche in einer Axialrichtung (Z) des Verpackungstubenverschlusses (1) verläuft und/oder angeordnet ist.

10. Verpackungstubenverschluss nach einem der Ansprüche 8 oder 9 , wobei der das Scharnier (5) ausbildende Materialsteg eine Dicke bzw. Materialstärke (t) aufweist, welche 10 bis 50%, mehr bevorzugt 10 bis 40%, weiter bevorzugt 10 bis 30% der Dicke bzw. Materialstärke der daran anschließenden Bauteile des Deckelements (4) und/oder Kappenelements (2) beträgt.

11. Verfahren zur Herstellung einer Verpackungstube (20) mit einem Verpackungstubenverschluss (1) bestehend aus einem Kappenelement (3) mit einem Schulterbereich (3) und einem dazu über ein Scharnier (5) bewegliches Deckelelement (4), aufweisend vorzugsweise die Verfahrensschritte nach einem der Ansprüche 1 bis 7, und umfassend den weiteren Schritt der Bereitstellung eines Tubenkörpers (10) zur Verbindung mit dem Verpackungstubenverschluss (1), vorzugsweise derart dass wenigstens ein Abschnitt (10a) des Tubenkörpers (10) in die Kavität (C) des Formgebungswerkzeugs hineinragt, wobei der Tubenkörper (10) beim Formen des Verpackungstubenverschlusses (1) mit diesem, vorzugsweise in einem Verfahrensschritt, verbunden wird.

12. Verfahren nach Anspruch 11, wobei das bereitgestellte Formgebungswerkzeug ein zusätzliches Formteil (B) aufweist, welches als ein- oder mehrteiliger Dorn ausgebildet ist, wobei vorzugsweise die weiteren Formteile (A1,A2,A3) des Formgebungswerkzeugs als eine dazu bewegliche, vorzugsweise mehrteilige Matrize ausgebildet sind, und wobei vor dem Zusammenführen der jeweiligen Formteile zum Formen des Verpackungstubenverschlusses (1) und des damit verbundenen Tubenkörpers (10), ein Tubenrohr oder dieses ausbildender Materialabschnitt über den Dorn geführt wird, vorzugsweise derart, dass ein Abschnitt, insbesondere ein Randabschnitt (10a) des Tubenkörpers (10) während des Formens beim Verpressen der Formteile in die Kavität (C) zur Verbindung mit dem Verpackungstubenverschluss (1) hineinragt.

13. Verfahren nach Anspruch 11 oder 12, wobei die Verbindung zwischen Verpackungstubenverschluss (1) und Tubenkörper (10) eine Verbindung mittels Schweissens, Klebens, oder Prägens eines Formschlusses umfasst.

14. Verpackungstube (20) herstellbar oder hergestellt mit dem Verfahren nach einem der Ansprüche 11 bis 13.

15. Vorrichtung zur Durchführung des Verfahrens nach einem der Ansprüche 1 bis 7 und/oder 11 bis 13, aufweisend ein Formgebungswerkzeug für ein Formpressverfahren, umfassend wenigstens ein erstes und ein dazu relativ bewegliches zweites Formteil (A,B), wobei sich ein zur Formung des Scharniers (5) eines Verpackungstubenverschlusses (1) ausgebildeter Innenkonturabschnitt (31a,31b) des Formgebungswerkzeugs, insbesondere bereitstellend eine Verjüngung in der Kavität (C) des Formgebungswerkzeugs, im Wesentlichen in einer Ebene (E) und/oder in einer Erstreckungsrichtung (R) erstreckt, welche in einer Axialrichtung (Z) des resultierenden Verpackungstubenverschlusses verläuft und/oder angeordnet ist.
